# EUROPEAN PATENT APPLICATION

(11) **EP 1 081 455 A1**
(43) Date of publication of application: **07.03.2001**
(21) Application number: 99117037.4
(22) Date of filing: 30.08.1999
(51) Int. Cl.: G01B 7/34, G01N 27/00

(54) **Low-temperature preamplifier**

(71) Applicant: Eidgenössische Technische Hochschule Zürich, 8092 Zürich (CH)
(72) Inventor: Rychen, Jörg, 8093 Zürich (CH); Studerus, Paul, 8093 Zürich (CH); Ihn, Thomas, 8093 Zürich (CH); Ensslin, Klaus, 8093 Zürich (CH)
(74) Representative: Blum, Rudolf Emil Ernst

(57) **Abstract**

A method and apparatus for amplifying low-level electrical signals at low temperatures (typically below 4.2 K) is disclosed. The problem of large heat dissipation (≈ mW) in cryogenic amplifiers (1, 2, 8) is solved. A low-temperature section (3) comprises a field-effect transistor or FET (1) and an elevated temperature section comprises current sensing means (2), such as an operational amplifier or op-amp (2). According to the invention the FET (1) is operated in the small-signal ohmic regime. Thereby ultra-low power losses in the FET (1) (e. g. below ≈ 1 nW) are achieved. One or several FETs (1) can be mounted inside a cryostat close to a measuring impedance (Z_{TF}) with negligible heating of the cryostat. A particular stable operation of the FET (1) in the ohmic regime and a selectable operating point are realized by supplying a constant source-drain voltage U_{SD} (e. g. 1 µV - 100 mV) and a separately adjustable gate-drain voltage U_{GD}. An amplifier (1, 2, 8) for implementing the method and a scanning probe microscope comprising the amplifier (1, 2, 8) are disclosed as well.

## Description

### TECHNICAL FIELD

The invention refers to the field of small-signal measurements at cryogenic temperatures. The invention is based on the subject-matter as set forth in the preamble of the claims 1, 6 and 9.

### BACKGROUND ART

In the article of J. Rychen et al., "A low-temperature dynamic mode scanning force microscope operating in high magnetic fields", Rev. Sci. Instrum. 70 (6), p. 2765-2768 (1999) a scanning force microscope (SFM) using a piezoelectric quartz tuning fork for non-optical tip-sample distance control is shown. The SFM-tip is made of a metal wire glued to one of the tuning fork prongs. The tip-sample interaction force induces a frequency and/or amplitude shift of the tuning fork vibration. The low-level piezoelectric measurement signals can be amplified with a cryogenic preamplifier which minimizes the stray capacitance between the signal source and ground. A major problem with this set-up are the power losses of the preamplifier that heat up the cryostat.

In the article of Adrian T.-J. Lee, "Low-power-dissipation broadband cryogenic preamplifier utilizing GaAs MESFETs in parallel", Rev. Sci. Instrum. 64 (8), p. 2373-2378 (1993) a voltage-sensitive two-stage preamplifier design for low-temperature operation is presented. The cryogenic stage consisting of four parallel gallium arsenide (GaAs) metalsemiconductor field-effect transistors (MESFETs) is connected in cascode to a room-temperature silicon (Si) junction field-effect transistor (JFET). The cascode arrangement has several drawbacks. The Si-JFET typically requires input currents in the range of milliamperes. In order to provide such currents the GaAs MESFET must be driven at least with ≈ 1 V source-drain voltage. Consequently the power dissipation in the cryogenic stage cannot be decreased below 1 mW. Furthermore the transistors in cascode are connected to a common power supply and the MESFET source-drain voltage cannot be controlled independently.

### BRIEF SUMMARY OF THE INVENTION

It is the object of the invention to provide an amplifier for low-level electrical signals that has reduced power losses and little heat dissipation for improved applicability at low temperatures. This object is achieved according to the invention by the subject-matter as set forth in claims 1, 6 and 9.

The invention resides in a method for amplifying low-level electrical signals, wherein a measuring voltage U_{G} is applied to a gate of a field-effect transistor (FET) for loss-free control of a source-drain current I_{SD}, I_{SD} is measured by a current sensing means, and the FET is operated at low temperatures in the ohmic regime. In this configuration the FET functions as a gate-voltage-controlled resistor for the source-drain circuit. The ohmic regime is the small-signal part of the FET amplifier response curve. It is characterized by an increasing linear or approximately linear (i. e. essentially ohmic) relationship between the source-drain voltage and the source-drain current. By operating in the ohmic regime the FET can be driven with small source-drain voltages U_{SD} (e. g. below 300 mV) and small source-drain currents I_{SD} (e. g. below 0.3 mA). Consequently the FET heat dissipation is strongly reduced (e. g. below 0.1 mW). The low temperatures refer to cryogenic applications typically at liquid nitrogen or liquid helium temperatures.

In one embodiment a constant voltage U_{SD} is applied to the source-drain channel of the FET. Thereby a stable operation of the FET and an unequivocal relationship between the gate-voltage U_{G} and the source-drain current I_{SD} is achieved. In this configuration the FET can be driven with source-drain voltages U_{SD} < 100 mV, preferred U_{SD} < 1 mV, especially preferred U_{SD} < 10 µV. In particular the FET can be operated with extremely low source-drain voltages U_{SD} (e. g. below ≈ 30 µV) and source-drain currents I_{SD} (e. g. below ≈ 30 nA) deeply in the ohmic regime. Therefore the overall power consumption can be minimized (e. g. below ≈ 1 pW).

In a further embodiment the current sensing means comprises a transimpedance amplifier, such as an operational amplifier (op-amp), for sensitive charge or current detection. A virtually grounded input terminal with vanishing input current requirement is achieved by operating the op-amp as an inverting amplifier with negative feedback over a resistor or some other negative-feedback network.

In other embodiments an impedance is measured in a voltage divider configuration comprising the impedance and a gate leak resistor, an adjustable gate-drain voltage U_{GD} is provided to tune the source-drain current I_{SD} to be delivered to the current sensing means, and the source-drain circuit is capacitively coupled to ground to damp oscillations.

In a specific embodiment the impedance of a tuning fork detecting the tip-sample distance in a scanning probe microscope is measured and the FET shall be mounted with the source-drain channel parallel to an external magnetic field and preferably on the tuning fork.

In another embodiment a current is measured in a three-stage setup comprising the FET and inverting operational amplifier followed by a second inverting operational amplifier, that is fed back over a resistor or some other negative-feedback network to the gate of the FET.

Additional embodiments refer to an amplifier having a low-temperature section for implementing the method for amplifying low-level signals, and to a scanning probe microscope comprising such an amplifier and a cryostat for housing the low-temperature section.

### BRIEF DESCRIPTION OF THE DRAWINGS

Other objects, features and advantages of the present invention will be described with reference to the accompanying drawings, in which
- Fig. 1: shows an amplifier according to invention for voltage measurements;
- Fig. 2a: shows an amplifier according to invention for impedance measurements;
- Fig. 2b: shows the cryogenic section of an amplifier according to Fig. 2a; and
- Fig. 3: shows a three-stage amplifier according to invention for current measurements.

In the drawings identical parts are designated by identical reference numerals.

### DESCRIPTION OF THE PREFERRED EMBODIMENTS

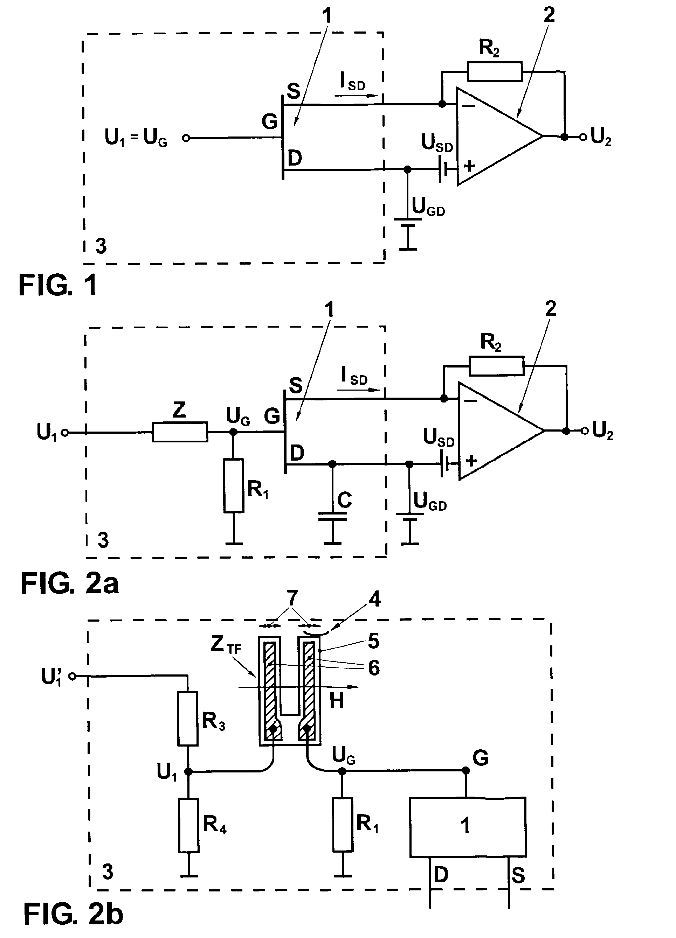

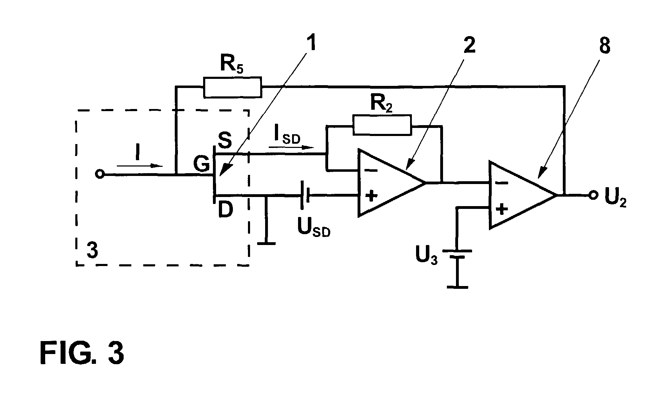

Fig. 1-3 show exemplary implementations of a multi-stage amplifier 1, 2 for low-level electrical signals. The amplifier comprises at least a transconductance amplifier 1 connected in series with a current sensing means 2, such as a transimpedance amplifier 2 or a current sensor. The transconductance amplifier receives a measuring voltage signal U_{G}, e. g. directly from an applied voltage U₁ (Fig. 1) or derived from an impedance Z (Fig. 2) or current I (Fig. 3) to be measured, and amplifies and transforms it into a current signal I_{SD}. The second stage serves for measuring this current signal I_{SD}. In particular the transimpedance amplifier 2 amplifies and transforms the current signal I_{SD} into a voltage signal U₂ that may further be amplified and be detected.

The method for amplifying low-level electrical signals comprises the steps of applying a measuring gate voltage U_{G} to a field-effect transistor (FET) 1 (first stage), modulating in the FET 1 a source-drain current I_{SD} by U_{G} and measuring I_{SD} outside the FET 1 by use of a current sensing means (second stage). According to invention the field-effect transistor 1 is operated at low (i. e. cryogenic) temperatures in the ohmic regime.

The source-drain current/voltage characteristic (response curve I_{SD}(U_{SD})) of a FET 1 has a small-signal ohmic part (U_{SD} <≈ 1 V) and a large-signal saturation part. Usually the FET 1 is operated in the saturation part where the source-drain current I_{SD} has a maximum dynamic range as a function of the control gate-voltage U_{G}, and where I_{SD} is essentially independent of the source-drain voltage U_{SD}. Deviating from these conditions has previously been avoided. In contrast, the method according to invention resides in operating the FET 1 in the ohmic regime. Thus the FET can be driven with smaller voltages U_{SD} and smaller currents I_{SD}. Consequently the power losses Pₗₒₛₛ=U_{SD}•I_{SD} are substantially reduced and the heat dissipation does no longer disturb cryogenic measurements. For example, assuming a source-drain resistance R_{SD} = 1 kΩ and a source-drain voltage U_{SD} = 300 mV, the power loss equals 0.1 mW.

Preferably a constant source-drain voltage U_{SD} is supplied to the FET 1, and in particular U_{SD} < 100 mV, preferred U_{SD} < 1 mV, especially preferred U_{SD} < 10 µV. This allows to further reduce the heat losses to low (e. g. down to nW) or even ultra-low power levels (e. g. below ≈ pW) while maintaining a stable operation of the FET 1. For example, for typical source-drain resistances 100 Ω - 1 kΩ and source-drain voltages U_{SD} in a range 10 µV - 100 mV, the power losses are limited to approximately 0.1 pW - 0.1 mW.

This is an improvement over previously reported amplifier schemes by one to ten orders of magnitude.

Fig. 1-3 show embodiments of the amplifier 1, 2, where the current sensing means 2 is an operational amplifier (op-amp) 2 configured as an inverting amplifier with negative feedback, preferably over a resistor R₂. Thereby the op-amp internal resistance (i. e. the virtual resistance between the input terminals) is made very small compared to the drain-source resistance R_{SD} of the FET 1. In this configuration low-power current signals I_{SD} from the FET 1 can be sensed with almost vanishing voltage drop at the inverting input terminal of the op-amp 2 and can be transformed into almost ideal voltage signals U₂ (with or without voltage gain).

The two-stage amplifier 1, 2 according to Fig. 1-2 has several advantages. The inverting op-amp 2 does not disturb the weak currents delivered from the FET 1 in the ohmic regime (e. g. I_{SD} ≈ 1 nA - 1 mA). The source-drain circuit of the FET 1 is supplied with a constant voltage U_{SD}. Thereby the source-drain current I_{SD} is kept at the operating point with good precision such that an unambiguous relationship between input (gate voltage U_{G}) and output (source-drain current I_{SD}) can be maintained even in the ohmic regime. Furthermore, by adjusting the source-drain voltage U_{SD}, the operating point of the FET 1 can be shifted more or less deeply into the ohmic regime to tune the source-drain current I_{SD}. The current I_{SD} can be conducted over relatively long distances (e. g. meters) such that the current sensing means 2 or op-amp 2 can be operated at elevated temperatures, in particular at room temperature, remote from the FET 1.

Optionally an adjustable gate-drain voltage U_{GD} is supplied between gate G and drain D for further tuning the source-drain current I_{SD} and hence the FET operating point. Furthermore oscillations in the source-drain circuit U_{SD}, S-D, 2 can be suppressed by coupling the source-drain circuit U_{SD}, S-D, 2 to ground via a capacitor C (Fig. 2).

Fig. 2a shows a preferred embodiment for measuring an impedance Z, Z_{TF}. For this purpose a voltage divider comprising the measuring impedance Z, Z_{TF} and a gate leak impedance R₁ is provided. An input voltage U₁ is applied to the voltage divider and a gate voltage U_{G}, that is proportional to the impedance Z, Z_{TF}, is derived over R₁.

Fig. 2b shows the case where the measuring impedance Z_{TF} consists of the (complex) impedance Z_{TF} of a piezoelectric tuning fork 5 onto which a tip 4 of a scanning probe microscope is mounted. The electrodes 6 are connected to the input voltage devider R₃, R₄ and to the gate G of FET 1. The tuning fork impedance Z_{TF} is measured in a voltage divider configuration Z_{TF}, R₁, dividing the input voltage U₁ into the gate voltage U_{G}, as indicated in Fig. 2a. The tuning fork 5 is piezoelectrically excitable (oscillation direction 7) and controllable by low-level electrical signals. Preferably an input voltage divider R₃, R₄ is provided for subdividing an externally applied voltage U₁' into an input voltage U₁ for the measuring impedance Z_{TF}.

The amplification method according to invention with a first cryogenic stage 1 (FET) is very useful for outcoupling and amplifying signals from the tuning fork 5, because the heat dissipation is minimum and is compatible even with extreme cryostat cooling requirements. Thus several or many FET amplification stages 1 can be placed inside a low-temperature section 3 or cryostat.

Fig. 3 shows a variant where an input current I is measured using the FET 1 and a two-stage amplifier arrangement 2, 8. The FET 1 is connected to an inverting op-amp 2, that is followed by a second inverting op-amp 8. The feedback resistor R₃ of the second op-amp 8 is connected to the gate G of the FET 1. Like in the previous figures the source-drain voltage U_{SD} allows to adjust the operating point for the source-drain current I_{SD}, and the op-amp 2 together with the feedback resistance R₂ serves as the current sensing means. The source-drain circuit U_{SD}, S-D, 2 is grounded. The op-amp 8 together with the feedback resistance R₅ keeps the gate potential U_{G} at a certain level and allows the input current I to flow via R₅ to ground. The additional voltage source U₃ allows to control the operating point of the gate-drain voltage U_{GD}.

Another object of the invention is an amplifier 1, 2, 8 for low-level electrical signals. The amplifier 1, 2, 8 has a low-temperature section 3 with a FET 1 remote from an elevated-temperature section with current sensing means 2. The amplifier 1, 2, 8 is designed for implementing the above-described method. Preferably the low-temperature section 3 comprises a measuring impedance Z_{TF}, a gate leak resistor R₁ and in particular an input voltage divider R₃, R₄, a capacitor C for coupling the source-drain circuit U_{SD}, S-D, 2 to ground and/or the feedback resistor(s) R₂ and/or R₅. Thus thermal noise from the resistors R₁-R₅ can be minimized. The elevated-temperature section shall comprise an operational amplifier 2, 8, a constant-voltage supply for a constant source-drain voltage U_{SD} and in particular a supply for a gate-drain voltage U_{GD}.

For cryogenic applications the FET 1 shall be an enhancement type FET 1 to avoid charge carrier freeze-out. A good choice is a MESFET, preferably a GaAs MESFET, or a metal-oxide FET (MOSFET) or a JFET.

A further object of the invention is a scanning probe microscope (SPM), in particular a low-temperature SPM, having a microscopic tip 4 for scanning a sample and a measuring electronics for processing signals from the tip 4, wherein the measuring electronics comprises an amplifier as described above.

In a preferred embodiment the scanning probe microscope comprises a cryostat, the low-temperature section 3 is mounted inside the cryostat and the elevated-temperature section is mounted outside the cryostat.

Preferably the FET 1 is mounted with the source-drain channel S-D parallel to a magnetic field H applied to a sample in order to avoid magnetic interference. A very compact design with minimum lead wire lengths in the cryostat can be achieved by mounting the FET 1 immediately onto the piezoelectric tuning fork 5. Thus the stray capacitance from the amplifier input to ground is minimized.

The Scanning probe microscope (SPM) may be for example a scanning tunnelling microscope (STM), a scanning or atomic force microscope (SFM, AFM), a magnetic force microscope (MFM), a Hall probe microscope (HPM), a near field scanning optical microscope (NSOM), a Kelvin force microscope, a scanning capacitance microscope, or other types of SPMs. If necessary the tip 4 shall be adapted to the desired application.

Owing to the new amplifier design 1, 2 the operation of a scanning probe microsope at cryogenic temperatures under high magnetic fields H in a dynamic operation mode is improved. High bandwidth is achieved with a phase locked loop which controls the driving frequency of the tuning fork 5. The tip 4 prepared on the tuning fork 5 can be used as a tunnelling tip 4 (STM-mode) or as a force-sensitive tip 4 (dynamic SFM operation mode) without any modifications on the scanning head 4, 5.

## Claims

1. A method for amplifiying low-level electrical signals, particularly suited for amplification of signals from low-temperature scanning probe microscopes, wherein a measuring gate voltage U_{G} is applied to a field-effect transistor (1) to modulate a source-drain current I_{SD}, that is measured by a current sensing means (2), and wherein the field-effect transistor (1) is operated at low temperatures, characterized in that the field-effect transistor (1) is operated in the ohmic regime.

2. The method according to claim 1, characterized in that a constant source-drain voltage U_{SD} is supplied to the field-effect transistor (1), and in particular that U_{SD} < 100 mV, preferred U_{SD} < 1 mV, especially preferred U_{SD} < 10 µV.

3. The method according to one of the previous claims, characterized in that
a) the current sensing means (2) comprises a transimpedance amplifier, in particular an inverting amplifier implemented by an operational amplifier (2) with negative feedback, preferably over a resistor (R₂) and/or
b) the current sensing means (2) is operated at elevated temperatures, in particular at room temperature, remote from the field-effect transistor (1) and/or
c) an adjustable gate-drain voltage U_{GD} is supplied to tune the source-drain current I_{SD} and/or
d) the source-drain circuit (U_{SD}, S-D, 2) is capacitively coupled to ground to damp oscillations.

4. The method according to one of the previous claims, characterized in that
a) in order to measure an impedance (Z, Z_{TF}), a voltage divider comprising the impedance (Z, Z_{TF}) and a gate leak impedance (R₁) is provided, an input voltage (U₁) is applied to the voltage divider and the gate voltage U_{G} is derived over the gate leak impedance (R₁),
b) in particular that the impedance (Z_{TF}) of a piezoelectric tuning fork (5), onto which a tip (4) of a scanning probe microscope is mounted, is measured, and
c) in particular that the input voltage (U₁) is provided by using an input voltage divider (R₃, R₄).

5. The method according to claim 3, characterized in that in order to measure a current (I), the current sensing means (2) is followed by an inverting operational amplifier (8) with a feedback resistor (R₅) that is connected to the gate (G) of the field-effect transistor (1) and to the current (I) to be measured.

6. An amplifier (1, 2, 8) for low-level electrical signals, particularly suited for amplification of signals from low-temperature scanning probe microscopes, having a low-temperature section (3) with a field-effect transistor (1) remote from an elevated-temperature section with current sensing means (2), characterized in that the amplifier (1, 2, 8) is designed for implementing the method according to one of the claims 1-5.

7. The amplifier according to claim 6, characterized in that
a) the low-temperature section (3) comprises a measuring impedance (Z_{TF}), a gate leak resistor (R₁) and in particular an input voltage divider (R₃, R₄), a capacitor (C) for coupling the source-drain circuit (U_{SD}, S-D, 2) to ground and/or a feedback resistor (R₂, R₅) and/or
b) the elevated-temperature section comprises an operational amplifier (2, 8), a constant-voltage supply for a constant source-drain voltage U_{SD} and in particular a supply for a gate-drain voltage U_{GD}.

8. The amplifier according to one of the claims 6-7, characterized in that
a) the field-effect transistor (1) is an enhancement type field-effect transistor (1) and/or
b) the field-effect transistor (1) is a MESFET, preferably a GaAs MESFET, or a MOSFET or a JFET.

9. A scanning probe microscope, in particular a low-temperature SPM, having a microscopic tip (4) for scanning a sample and a measuring electronics for processing signals from the tip (4), characterized in that the measuring electronics comprises an amplifier according to one of the claims 6-8.

10. The Scanning probe microscope according to claim 9, characterized in that
a) the low-temperature section (3) is mounted inside a cryostat and the elevated-temperature section is mounted outside the cryostat and/or
b) the field-effect transistor (1) is mounted with the source-drain channel (S-D) parallel to a magnetic field H applied to a sample and/or
c) the field-effect transistor (1) is mounted on a piezoelectric tuning fork (5) and/or
d) in particular that the scanning probe microscope is a scanning tunnelling microscope, a scanning force microscope, a magnetic force microscope, a Hall probe microscope, a near field scanning optical microscope, a Kelvin force microscope or a scanning capacitance microscope.
